Europäisches Patentamt

European Patent Office

Office européen des brevets

(19)

(11) Veröffentlichungsnummer: **0 262 535**
**A2**

(12) # EUROPÄISCHE PATENTANMELDUNG

(21) Anmeldenummer: **87113738.6**

(51) Int. Cl.⁴: **B65D 83/00**

(22) Anmeldetag: **19.09.87**

(30) Priorität: **03.10.86 DE 8626411 U**
**14.05.87 DE 3716110**

(43) Veröffentlichungstag der Anmeldung:
**06.04.88 Patentblatt 88/14**

(84) Benannte Vertragsstaaten:
**AT BE CH DE ES FR GB GR IT LI LU NL SE**

(71) Anmelder: **Bramlage GmbH**
**Küstermeyerstrasse 31 Postfach 1149**
**D-2842 Lohne/Oldenburg(DE)**

(72) Erfinder: **Mettenbrink, Herbert**
**Auf der Höhe 3**
**D-2842 Lohne/Oldenburg(DE)**
Erfinder: **Rauen, Karl Albert**
**Fontanestrasse 4**
**D-4020 Mettmann(DE)**

(74) Vertreter: **Rieder, Hans-Joachim, Dr. et al**
**Corneliusstrasse 45 Postfach 11 04 51**
**D-5600 Wuppertal 11(DE)**

(54) **Spender zur portionierten Ausgabe pastöser Massen.**

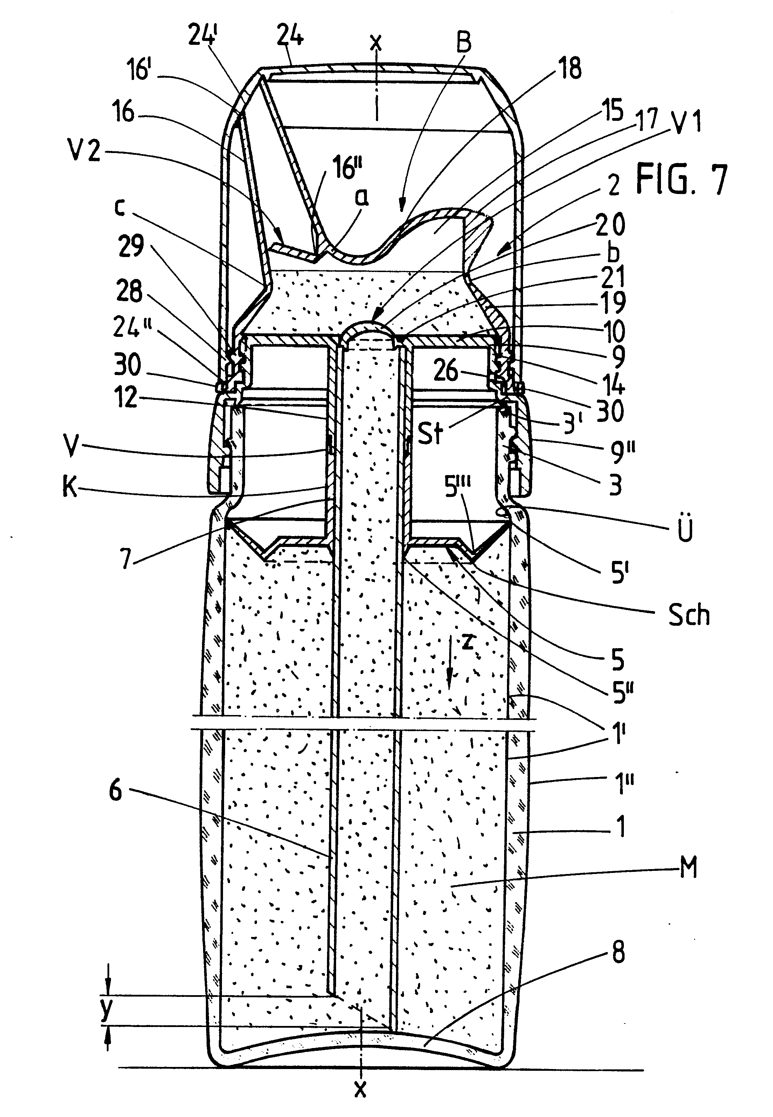

(57) Die Erfindung betrifft einen Spender zur portionierten Ausgabe pastöser Massen (M), z.B. Senf oder dergleichen, mit einem Spendergehäuse (1), auf dessen Oberrand (3') eine Decke (10) aufsitzt, welche Träger einer Pumpeinrichtung (2)ist, und in welchem Spendergehäuse (1) ein schrittweise abwärts in Richtung des Gehäusebodens (8) wandernder Kolben (5) vorgesehen ist, der von einem bis zum Gehäuseboden reichenden, ortsfesten Steigrohr (6) durchsetzt ist, dessen oberes Ende mit einer Ausgabetülle (16) in Verbindung steht, welcher Ausgabetülle eine Betätigungsfläche (17) der Pumpeinrichtung benachbart ist, bei deren Rücklauf der Kolben abwärts gesaugt ist, und schlägt zur Erzielung einer herstellungstechnisch einfachen, gebrauchsoptimalen Bauform vor, daß das unten offene Steigrohr (6) unterhalb des Eingangsventiles (V1) eines durch Verlagerung der Betätigungsfläche (17) sich elastisch verkleinernden Pumpenraumes (15) sitzt und der Kolben (5) in Ausgangs-Grundstellung (Fig.7) in einem Abstand unterhalb der Decke (10) sitzt derart, daß das zwischen Kolben (5) und Oberrand (3') des Spendergehäuses (1) verbleibende Volumen etwa dem Innenvolumen des Pumpenraumes (15) entspricht.

FIG. 7

## Spender zur portionierten Ausgabe pastöser Massen

Die Erfindung bezieht sich auf Spender zu portionierten Ausgabe pastöser Massen, z.B. Senf oder dergleichen, mit einem Spendergehäuse, auf dessen Oberrand eine Decke aufsitzt, welche Träger einer Pumpeinrichtung ist, und in welchem Spendergehäuse ein schrittweise abwärts in Richtung des Gehäusebodens wandernder Kolben vorgehen ist, der von einem bis zum Gehäuseboden reichenden ortsfesten Steigrohr durchsetzt ist, dessen oberes Ende mit einer Ausgabetülle in Verbindung steht, welcher Ausgabetülle die Betätigungsfläche der Pumpeinrichtung benachbart ist, bei deren Rücklauf der Kolben abwärts gesaugt ist.

Ein Spender dieser Art ist durch die CH-PS 276 364 bekannt. Dort ist die Pumpeinrichtung in die Decke des Spenders durchragenden Steigrohr untergebracht. Das inverse Ende desselben enthält ein Kugel-Eingangsventil. Daran anschließend erstreckt sich der Kolben, dessen Schaft schließlich in die freiliegende Betätigungstaste übergeht. Der Kolben besitzt randseitige Öffnungen, durch welche die pastöse Masse beim Hinhub durchquillt, um anschließend von den verschlossenen Randpartien beim federveranlassten Rückhub weiter hochgeschleppt zu werden. Die diesbezügliche, mehr einem Schöpfwerk vergleichbare Pumpeinrichtung arbeitet äußerst viskositätsabhängig. Um das Zurückziehen der Masse aus der Ausgabetülle zu vermeiden, trägt dieses endseitig noch ein ebenfalls in Form eines Kugelventils gestaltetes Ausgangsventil. Die Masse ist oberseitig von einem relativ dickwandigen, mit metallenen Kolben überfangen, der mit zunehmendem Austrag sich in Richtung des Bodens des Spendergehäuses bewegt.

Aufgabe der Erfindung ist es, einen gattungsgemäßen Spender in herstellungstechnisch einfacher, gebrauchsgünstiger Weise so auszubilden, daß mit dem Zuordnen der Pumpeinrichtung eine den sofortigen Gebrauch ermöglichende Konditionierung erreicht wird.

Gelöst ist diese Aufgabe durch die im Anspruch 1 angegebene Erfindung.

Die Unteransprüche sind vorteilhafte Weiterbildungen des erfindungsgemäßen Spenders.

Zufolge solcher Ausgestaltung ist ein gattungsgemäßer Spender von erhöhtem Gebrauchswert erzielt: Dieser liegt vor allem in der auf einfachste Weise erreichten und dann bleibenden Einsatzbereitschaft. Es braucht nicht in vielen anfänglichen Pumpbewegungen oder sogar durch hilfsweises Schütteln der Massestrom eingeleitet zu werden. Vielmehr ergibt sich die Gebrauchsbereitschaftstellung spontan beim Zuordnen der Pumpeinrichtung zum Spendergehäuse. Die entsprechenden baulichen Mittel bestehen darin, daß das unten offene Steigrohr unterhalb des Eingangsventiles eines durch Verlagerung der Betätigungsfläche sich elastisch verkleinernden Pumpenraumes sitzt und der Kolben in Ausgangs-Grundstellung in einem Abstand unterhalb der Decke sitzt derart, daß das zwischen Kolben und Ober rand des Spendergehäuses verbleibende Volumen etwa dem Innenvolumen des Pumpenraumes entspricht. Das so bei Zuordnung der Pumpeinrichtung verdrängte Material steigt in den Pumpenkopf und benetzt dort das Eingangsventil. Selbst ungünstige Toleranzpaarungen zwischen Eingangsventil und seiner Vertilsitzfläche werden so kompensiert. Das Steigrohr ist innen auf seinem gesamten in der Masse einsteckenden Längenabschnitt freigehalten von irgendwelchen Teilen der Pumpeinrichtung. Die Masse steigt also ohne Hindernis, so daß das Innenvolumen des Pumpenraumes stets wieder ergänzt wird. Um in vorteilhafter Weiterbildung zu einem exakten, ein Herausquellen überschüssiger Masse vermeidenden Ausgangs-Grundstellung des Kolbens zu gelangen, stößt dieser gegen einen von der Decke ausgehenden Anschlag. Letzterer läßt sich gleich mit anformen und definiert die Abstandslage so auf günstigste Weise. Konkret läßt sich eine entsprechende Ausgestaltung dahingehend realisieren, daß der Anschlag von einer Verbreiterung auf der Mantelfläche des Steigrohres gebildet ist. Beispielsweise besteht hier die Möglichkeit der Anformung einer dem Eingangsventil vorgelagerten Zwischenkammer größeren Querschnitts als dem des zweckmäßig zylindrischen Steigrohres oder aber in der Weise, daß die Verbreiterung als von der Decke ausgehende Einsteckhülse für das Steigrohr gestaltet ist. Eine solche Einsteckhülse läßt die vorteilhafte Möglichkeit einer Vormontage der gesamten Pumpeinrichtung zu:

Zunächst wird das Steigrohr in die Einsteckhülse eingedrückt und dann auf das Steigrohr anschließend der Kolben aufgeschoben. Letzterer, meist mit Dichtungslippen ausgestattet, hält reibungsschlüssig am Steigrohr. Vorteilhaft ist es weiter, daß das Steigrohr unterhalb eines das Eingangsventil tragenden Bodens eines topfförmigen Aufsatzes angeordnet ist, oberhalb dessen sich der Pumpenraum erstreckt. Der so deckelartige Aufsatz läßt sich in günstiger Weise als Verbindungselement zum Spendergehäuse benutzen. Unter Berücksichtigung unterschiedlicher Formgebung des Glasrandes kommt ihm insoweit auch Adapterfunktion zu. Die entsprechende Anspassung auf den jeweiligen marktüblichen Behälter wird dadurch recht einfach. Auch bezüglich der Kolbenanpassung und des Kolbenübertritts über einen verschmälerten Behälterhals ist mit einfachen Mitteln eine günstige Lösung dadurch gefunden, daß der tellerförmige Kolben aus durchbiegungselastischem Material gebildet ist und einen in Richtung der Decke abgebogenen Randabschnitt besitzt. Der wie eine den sich absenkenden Spiegel vergleichmäßigende "Haut" wirkende Kolben weicht so schadfrei aus. Sein elastisches Material bzw. die Rückstellkraft bürgt für eine funktionsgerechte Anlage an der Innenwandung des Spendergehäuses. Die Biegungselastizität ermöglicht auch das spätere Herausziehen des Kolbens, beispielsweise beim Wechseln der Pumpeinrichtung auf den nächsten Behälter. Das vorherige Reinigen der Pumpeinrichtung geschieht durch einfaches Durchspülen. Die Mechanik ist so stets wiederverwendbar. Auch das manuelle Aufsetzten bringt, wie oben herausgestellt, die vorteilhafte Verdrängung der Masse aus dem Spenderhalsbereich in den Pumpenraum. Weiter wird vorgeschlagen, daß das obere Ende des Steigrohres mit einer in das Steigrohr gesteckten Einsteckhülse verbunden ist und in der Einsteckhülse sich eine gegen deren freien Stirnrand abstützende Zug-Wendelfeder befindet, die von der Unterseite eines Tellers des Eingangsventiles ausgeht. Zudem bringt die Erfindung in Vorschlag, daß die Ausgabetülle an ihrer der Betätigungsfläche gegenüberliegende Flanke eine Knickstelle besitzt und die Betätigungsfläche mit ihrer Fußwand einen Kniehebel einschließt. Dies führt unter Einbeziehung der Befestigungsstellen zu einem die Ausgabetülle ausstellenden Gelenkvieleck; der Tüllenmund kann so bis in die Randebene des Behältergehäuses schwenken, was mit einfachsten Mitteln einen ganz gezielten Austrag ermöglicht. Weiter erweist es sich als vorteilhaft, daß der Kolben einen über seine umfangsseitige Dichtkante in Richtung der Decke vorstehenden Kragen besitzt, welcher in Überlappung tritt zu der von der Decke ausgehenden Einsteckhülse. Die entsprechende Überlappung kann reibungsschlüssiger Art sein. Ausserdem bietet sich die einer Klipsverbindung an. Auf diese Weise lassen sich der Kolben und der die Decke bildende Körper im Wege der Vormontage miteinander verbinden. Eine entsprechende Trennstelle erweist sich in soweit als vorteilhaft, als durch Variation der Kragenlänge angepasste Verdrängungs-Voluminar erreicht werden, je nach der Formgebung des Spendergehäuses im Halsbereich. Andererseits besteht auch eine vorteilhafte Ausbildungsmöglichkeit dahingehend, daß dem Kragen Klemmwülste angeformt sind. Letztere erhöhen die Andrückkraft des Kragens in Bezug auf die vom Steigrohr gebildete Führungsfläche des Kolbens. Um im klemmwulstseitigen Abschnitt eine die Zuordnung erleichternde Augestaltung zu erhalten, empfiehlt es sich, diesen Bereich beispielsweise kreuzzuschlitzen. Will man in Bezug auf das Ausgangsventil der Pumpeinrichtung auf das sogenannte hydraulische Prinzip verzichten, welches in der Patentanmeldung P3042285 beschrieben ist, so kann eine vorteilhaft Weiterbildung darin bestehen, daß dem Pumpenraum ein Auslassventil im Bereich des Ansatzes der Ausgabetülle zugeordnet wird. Weiter erweist es sich in baulicher Hinsicht als günstig, daß die Decke als Boden eines topfförmigen Aufsatzes gestaltet ist, welcher sich über eine Zwischenstufe in einen querschnittsgrößeren Aufsatzring fortsetzt. Der entsprechende Wandungsversatz bringt nicht nur eine Erhöhung der Stabilität des Aufsatzes, sondern bildet auch günstige Voraussetzungen für eine Weiterbildung dahinge hend, daß die Zwischenstufe mit einer Dichtlippe ausgestattet ist, die sich auf den Oberrand des Spendergehäuses aufsetzt. Eine insbesondere gebrauchsstabile Ausgestaltung des Eingangsventiles ergibt sich durch eine kalottenförmige Ventilklappe in der konzentrisch zum Steigrohr liegenden Decke. Die entsprechende Kalotten-Wölbung verleiht der Ventilklappe eine hohe innere Stabilität, d.h. Flächenversteifung. Wenn sie sich im übrigen domartig zum im Steigrohr ansteigenden Ausgabegut erstreckt, ergibt sich eine besonders günstige Krafteinleitung für die Klappbewegung aufgrund der erreichten Flächenvergrößerung, die einer solchen kalottenförmigen Ausgestaltung zugrunde liegt. Weiter erweist es sich als funktionsbegünstigend, daß der Randabschnitt des Kolbens über eine V-förmige Ringkehle in die zentrale, etwas dickere Kolben-Ringfläche übergeht. Hierdurch ist ein Kompromiss gefunden zwischen der Notwendigkeit einer besonders verformungsfreudigen Peripherie und einem steiferen Mittelabschnitt. Weiter liegt eine günstige Ausgestaltung vor durch ein insgesamt den Pumpenraum bildenden elastisches Kopfstück, welches auf die Topfwandung des Aufsatzes dichtend aufgeprellt ist und sich in einen auswärtsgerichteten Ringbund fortsetzt, auf dessen Oberseite der Mündungsrand einer Schutzkappe aufsitzt. Ein solches elastisches Kopfstück eröffnet überdies in vorteilhafter Weise die Möglichkeit der materialeinstückigen Anformung des Ausgangsventils, beispielsweise ebenfalls in Form einer Ventilklappe. Der Ringbund ist überdies in der Weise weitergebildet, daß er als bewegliche Dichtlippe gestaltet ist, wobei die Schutzkappe ein Innengewinde hat, welches in ein Gegengewindes des Aufsatzes eingreift. Am Ende der Aufschraubbewegung übt der Mündungsrand der Schutzkappe eine Andrück-Kraft auf den Ringbund aus, der dadurch gegen die Zwischenstufe des topfförmigen Aufsatzes tritt. Die Dichtlippe ver schließt so bei aufgesetzter Schutzkappe eine Lufteinlassöffnung für den Luftausgleich im Bereich hinter dem in Bodenrichtung des Gehäuses wandernden Kolben. Weiter besteht ein vorteilhaftes Merkmal der Erfindung darin, daß das aus Glas bestehende Spendergehäuse eine zylindrische Innenwandfläche, eine in Längsrichtung ballig verlaufende Aussenfläche und einen querschnittskleineren Hals besitzt, welch letzterer den Aufsatz trägt. Die zylindrische Innenfläche bringt einen einwandfreien Kolbenlauf. Die halsartige Einziehung hat den Vorteil, daß der Kolbenrand eine bei Zuordnung größere Spannanlage zur dortigen Innenwandung einnimmt. Das führt zu einem besonders sicheren Verdrängen des pastösen Inhalts in die Pumpenkammer. Eine definierte Ausgangs-Grundstellung des Kolbens ergibt sich dabei in einfacher Weise dadurch, daß die Aussenrandkante des in Richtung der Decke abgebogenen Randabschnitts des Kolbens in Ausgangs-Grundstellung unmittelbar unter der Übergangsstufe der zum querschnittskleineren Hals liegt. Weder ein Verkippen noch Schüttel vermag so ein Ausweichen bzw. ein Überlaufen der pastösen Masse hinter den Kolben zu bewirken. Schließlich erweist es sich noch als vorteilhaft, daß sich die Dicke des tellerförmigen Kolbens nach aussen hin verringert. Dies kann zum Beispiel in der Weise geschehen, daß der periphere V-Schenkel lippenartig ausspitzt. Eine besonders sensible Ausbildung des Eingangsventiles ergibt sich mit baulich einfachen Mitteln dadurch, daß das Eingangsventil von einem auf einen seitlich der Ventilsitzfläche angeordneten Tragzapfen aufgesteckten, elastischen Lappen gebildet ist, dessen Rand von einem nur in Richtung des Tragzapfens offengelassenen Ringwall umgeben ist, und daß die Ventilsitzfläche von einer schneidenförmigen Ringrippe auf der Oberseite der Decke gebildet ist. Der Spender kann daher für nahezu flüssige Substanzen eingesetzt werden, jedenfalls solche auch höherer Viskosität. Die von einer schneidenförmigen Ringrippe an der Oberseite der Decke gebildete Ventilsitzfläche im Verein mit der Elastizität des Lappen optimiert die angestrebte sichere Schließ-und Öffnungsfunktion. Dabei erweist es sich zusätzlich als günstig, daß der Kamm der Ringrippe höhengleich fluchtet mit einer, den Lappen abstützenden Ringschulter des Tragzapfens. Dies stellt die höhengleiche Ausrichtung sicher; jedes Verkippen ist ausgeschlossen. Ein Verschwenken des Eingangsventils auf den Tragzapfen ist wirksam unterbunden zufolge des besagten Ringwalles, wobei auch schon die aus der Elastizität des Lappens zunutzende Klemmkraft für eine solche Drehsicherung praktisch schon ausreicht. Bezüglich des Tragzapfens kann es sich um eine druckknopfartige Lösung handeln.

Der Gegenstand der Erfindung ist nachstehend anhand mehrerer zeichnerisch veranschaulichter Ausführungsbeispiele näher erläutert.
Es zeigt

Fig. 1 den erfindungsgemäßen Spender gemäß dem er sten Ausführungsbeispiel, und zwar im Vertikalschnitt in Grundstellung,

Fig. 2 einen entsprechenden Schnitt in Ausgabestellung,

Fig. 3 eine Draufsicht auf den Spender bei abgenommener Schutzkappe,

Fig. 4 einen der Fig. 1 entsprechenden Vertikalschnitt durch einen Spender gemäß dem zweiten Ausführungsbeispiel,

Fig. 5 einen solchen Schnitt bei fast entleertem Spender,

Fig. 6 die Draufsicht auf Fig. 5,

Fig. 7 einen der Fig. 1 entsprechenden Vertikalschnitt durch einen Spender gemäß dem dritten Ausfüh rungsbeispiel,

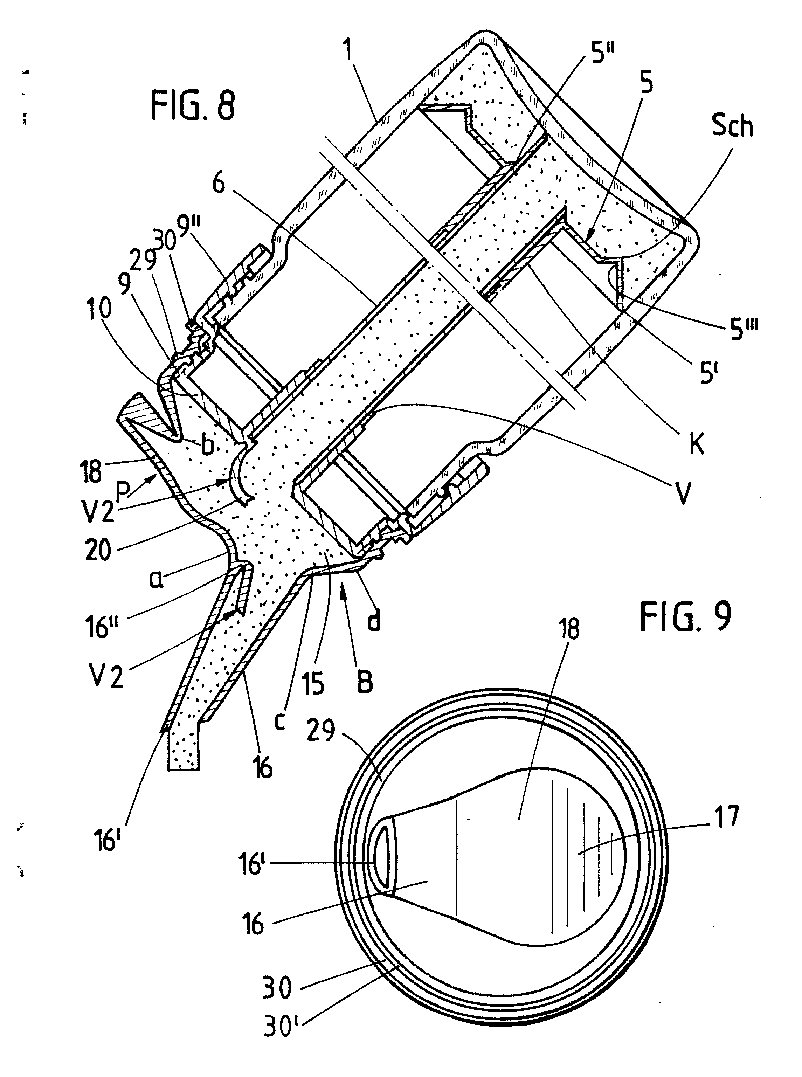

Fig. 8 einen entsprechenden Schnitt in Ausgabestel lung,

Fig. 9 die Draufsicht auf den Spender bei abgenommener Schutzkappe,

Fig. 10 eine Herausvergrößerung des Übergangsbereichs zwischen Oberrand des Behältnisses und Aufsatz,

Fig. 11 eine abgewandelte Form des Kolbens in Einzeldar stellung, partiell aufgebrochen,

Fig. 12 die Draufsicht hierzu,

Fig. 13 eine Herausvergrößerung der anlenkseitigen Zone des Eingangsventils,

Fig. 14 die Draufsicht auf eine abgewandelte Form des Eingangsventils und

Fig. 15 den Schnitt gemäß Linie XV-XV in Figur 14.

Der Spender zur portionierten Ausgabe pastöser Masse M umfasst ein diese aufnehmendes Spendergehäuse 1 und eine Pumpeinrichtung 2.

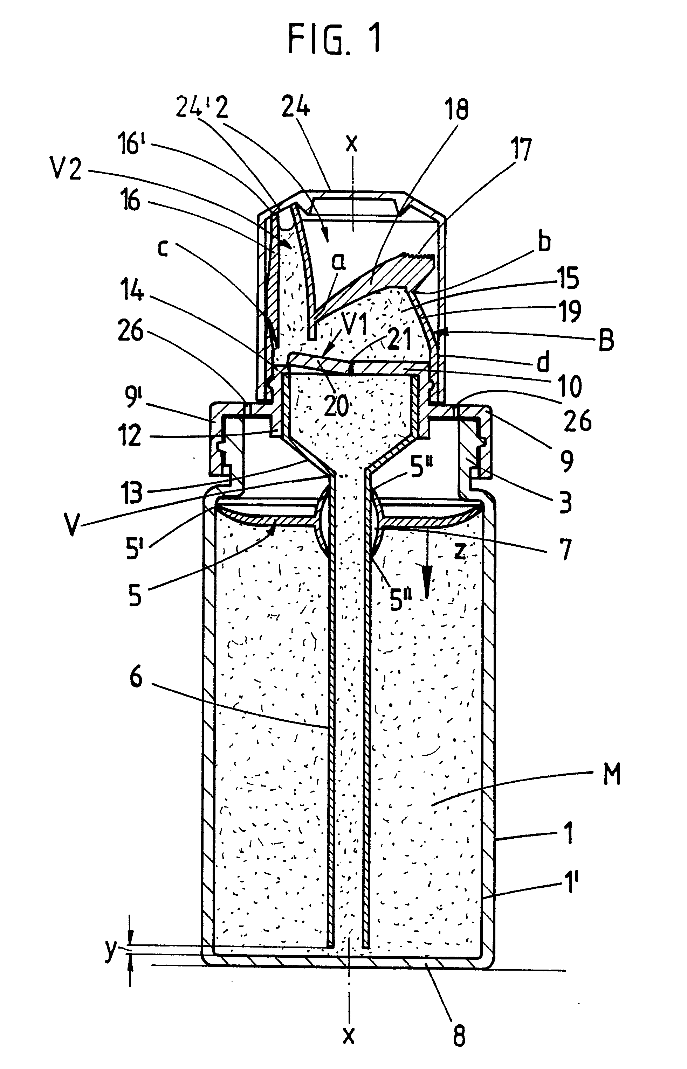

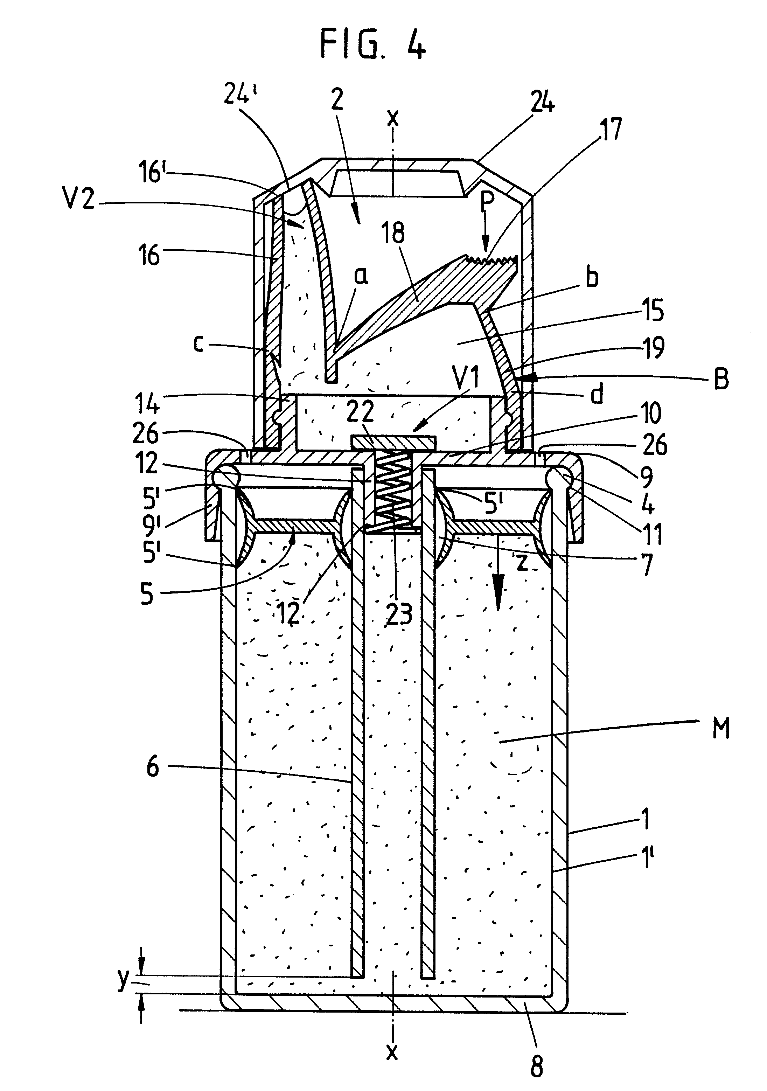

Bezüglich des Spendergehäuses 2 handelt es sich um ein beispielsweise Senf enthaltendes Glas mit Gewindehals 3 (vergleiche Fig.1 und 7) oder ein einen Wulstrand 4 aufweisendes Glas (vergleiche Fig. 4). Zumindest die Innenwandfläche 1' des Spendergehäuses 1 respektive des Glases ist in Längsrichtung gesehen zylindrisch und im Querschnitt kreisrund. Unter Hinweis auf Fig. 7 ist erkennbar, daß die Außenfläche 1" des dortigen Spendergehäuses 1 leicht ballig gestaltet ist, also in der erläuterten Richtung ein aussenelliptischer Querschnitt vorliegt, d.h. die Aussenabmessung des Glases ist im Mittelbereich im Durchmesser größer als in den beiden Endbereichen.

Die den Gläsern mittels entsprechender Gegenhaltemittel zuordbare Pumpeinrichtung 2 besitzt einen Kolben 5. Dessen zum freien Ende hin ausspitzende Randlippe 5' oder Randlippen 5' führen

sich an der zylindrischen Innenwandfläche 1' des Spendergehäuses 1. Der Kolben sitzt auf der Mantelfläche eines Steigrohres 6 kreisrunden Querschnitts. Letzteres ist ortsfest und erstreckt sich in der Längsmittelachse x-x des zylindrischen Spendergehäuses 1. Die entsprechend zentrale Durchbrechung des Kolbens 5 ist mit 7 bezeichnet. Sie bildet im Bereich des Durchbrechungsrandes ebenfalls Lippen 5' aus, die dichtend auf der Mantelfläche des Steigrohres aufliegen und die Masse sauber abstreifen. Der Anlagedruck ist der-gestalt, daß sich eine reibungsschlüssige Zuordnung bzw. Führung ergibt.

Der Kolben 5 besteht weiter aus durchbiegungselastischem Material. Er ist tellerförmig gestaltet. Seine Dicke im zentralen Ringbereich ist größer gewählt als die eine oder mehrere Ringlippen bildende Peripherie. In die Ebene projiziert, ist der Durchmesser des Kolbens 5 größer als der größte lichte Durchmesser des Spendergehäuses 1. In allen Fällen besitzt der Kolben eine der Zuordnungsrichtung z abgewandte Randrundung (vergleiche Fig. 1) oder Abbiegung (vergleiche Fig. 7). Dort geht der Randabschnitt des Kolbens 5 über eine V-förmige Ringkehle 5''' in die zentrale, dickwandiger gestaltete Kolben-Ringfläche über. Der periphere V-Schenkel ist von größerer Länge als der andere V-Schenkel. Seine Länge entspricht derhalben des erstgenannten; der Divergierungswinkel beträgt ca. 90 Grad. Der masseseitige Überstand des V-Scheitels Sch fluchtet im wesentlichen mit dem Lippenende der sich auf der Mantelfläche des Steigrohres führenden inneren Abstreiflippe 5''.

Das Steigrohr 6 endet in geringem Abstand y zum Boden 8 des Spendergehäuses 1. Der Abstand liegt deutlich unter dem lichten Durchmessermaß des Steigrohres. Dies und die hochgradige Durchbiegungselastizität des Kolbens 5 führt zu einer nahezu restfreien Ausgabe der pastösen Masse M. Die aus Fig. 7 ersichtliche Tellerform (der Scheitel Sch entspricht dem Ring-Standrand des Tellers) könnte auch, in Optimierung der Restausgabe, zumindest im Mittelbereich der in Fig. 7 vorgenommenen leichten Einziehung des Bodens angepasst sein. Bei diesem Ausführungsbeispiel ist das Steigrohr bodenseitig überdies schräg angeschnitten. Die höchste Stelle steht auf dem Boden auf 8.

Das Steigrohr 6 sitzt unterhalb einer die Öffnung des becherartigen Spendergehäuses verschließenden und zugleich das Befestigungsmittel für die Pumpeinrichtung 2 aufweisenden Decke 10. Gemäß dem ersten und dritten Ausführungsbeispiel ist die Decke 10 von einem als Schraubdeckel realisierten Aufsatz 9 gebildet. Sein Innengewinde wirkt mit dem entsprechenden Außengewinde des Halses 3 zusammen.

Gemäß dem zweiten Ausführungsbeispiel ist die Decke 10 dagegen vom Boden eines als Klipskappe gestalteten Aufsatzes 9 realisiert. Die Klipskappe weist in Nähe der Decke 10 dazu in der im wesentlichen parallel zur Gehäusewandung verlaufenden Aufsatzwandung 9' eine Klipsnut 11 auf, die mit dem auch die Mantelwand des Spendergehäuses überragenden Abschnitt des Wulstrandes 4 zusammenwirkt, welcher quer nach auswärts ragende Abschnitt somit als Klipsvorsprung fungiert. Zur Erleichterung der Klipszuordnung ist der Deckenrand innenseitig trichterförmig erweitert. Beide geschilderten Zuordnungsarten sind also reversibel.

Der somit als Adapter fungierende Aufsatz 9 geht gemäß Fig.7 über eine Zwischenstufe St in einen gegenüber der Aufsatzwandung 9' querschnittsgrößeren Aufsatzring 9'' über. Dessen Mantelfläche kann zur Erhöhung der Griffigkeit gerauht bzw. längsgerieft sein. Hier trägt die Innenseite des querschnittsgrößeren Aufsatzringes 9'' das Gegengewinde für das halsseitige Gewinde. Sie liegt mit ihrer Mantelfläche ebenengleich zur Außenfläche des Spendergehäuses 1. Die entsprechend anschmiegende Anordnung ergibt sich aufgrund des halsbildenden Einwärtsversatzes der Wandung des Spendergehäuses (dies gilt auf bezügl. Fig.1).

Die als horizontaler Wandungsversatz realisierte Zwischenstufe St erstreckt sich oberhalb des Oberrandes 3' des Spendergehäuse-Halses 3. Die diesbezügliche Zone läßt sich daher in vorteilhafter Weise nutzen zur Ausbildung von Dichtmaßnahmen, die darin bestehen, daß von der Unterseite der Zwischenstufe St eine schräggestellte Dichtlippe 9''' ausgeht.

Zur Verbindung des Steigrohres 6 mit dem Aufsatz 9 bildet dieser eine zum Innenraum des Spendergehäuses 1 hin offene, stutzenartige Einsteckhülse 12 aus. Die Steckverbindung ist vorzugsweise reibungsschlüssig. Die Einsteckhülse 12 bringt eine Verbreiterung des Steigrohres. Diese Verbreiterung ist genutzt zur abstandsdefinierenden Zuordnung des Kolbens 5, und zwar in seiner Ausgangs-Grundstellung.

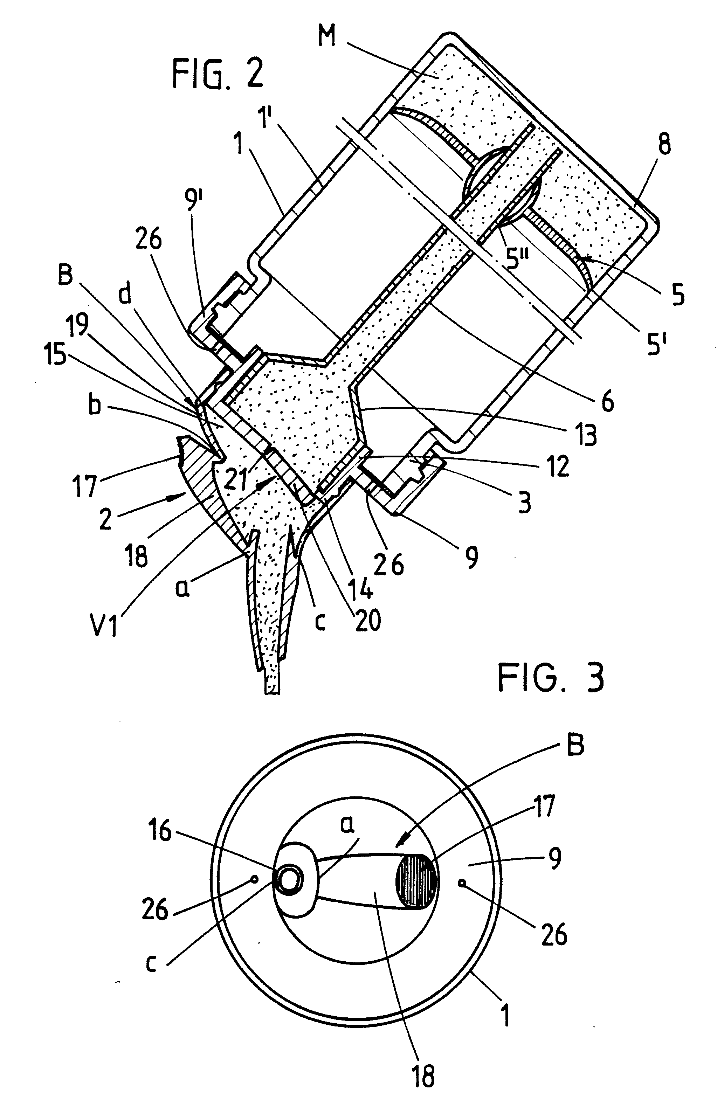

Gemäß Figur 2 ist die deckenseitige Verbreiterung von vom Fußabschnitt eines trichterförmig aufgeweiteten Abschnitts 13 des Steigrohres 6 realisiert. Sie entspricht deckenseitig dem drei-bis vierfachen lichten Durchmesser des Steigrohres. Der Abschnitt 13 erstrekkt sich noch innerhalb der Halszone des Spendergehäuses 1. Der trichterförmige Abschnitt 13 geht sodann nach oben hin in einen zylindrischen über. Hierdurch ist eine Art Vorkammer gebildet.

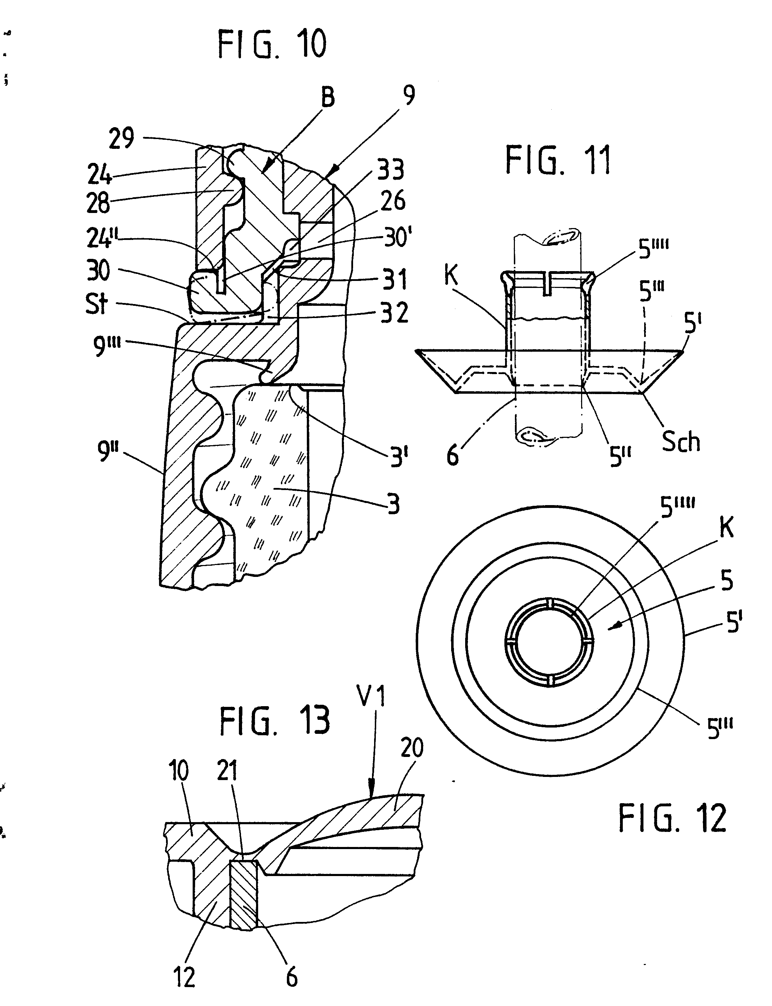

Aber auch der Kolben 5 selbst ist in die distanzbildende Maßnahme mit einbezogen, indem er einen über seine umfangsseitige Dichtkante in Richtung der Decke 10 vorstehenden Kragen K besitzt. Letzterer tritt gemäß Fig. 7 partiell in Überlappung zur Einsteckhülse 12. Die zylindrische Einsteckhülse 12 formt dazu einen abgesetzten Vorsprung aus, der in eine formentsprechende Ringausnehmung am korrespondierenden Ende des Kragens K eintritt, so daß eine S-Fuge entsteht. Beide Teile können so in eine der Reibungshaft entsprechende Verbindung treten. Natürlich ist auch eine Rastverbindung denkbar. Die in Figur 11 wiedergegebene Variante bildet im deckenseitigen Endbereich des Kragens K einen ringförmigen Klemmwulst 5'''' aus. Letzterer läßt sich im Wege der Anformung gleich mit berücksichtigen. Die Innenseite ist deckenseitig des Wulstes getrichtet und innenseitig zurückgeschnitten, so daß praktisch nur der Kamm des Klemmwulstes 5'''' und die am anderen Ende des Kragens K angeformte Abstreiflippe 5'' des Kolben in führende Berührung mit der Mantelwand des Steigrohres 6 treten. Durch Kreuzschlitzung des den Klemmwulst 5'''' ausbildenden Bereichs des Kragens K ergibt sich im Verein mit der dortigen Trichterung ein erleichtertes "Auffädeln" des Kolben auf das Steigrohr.

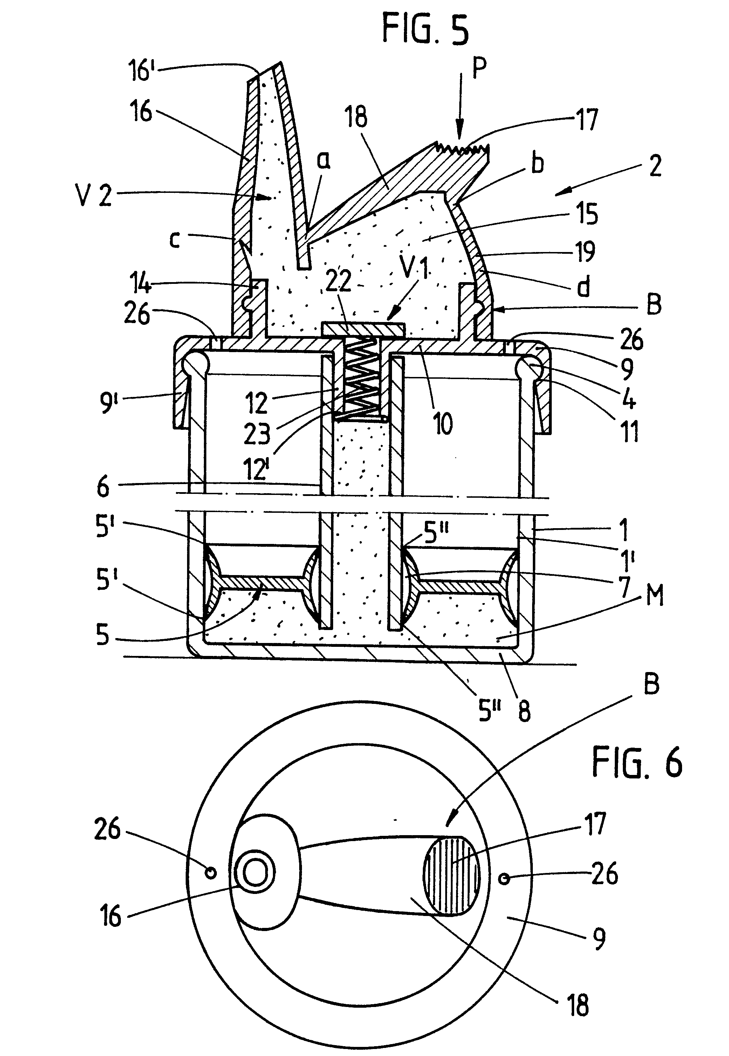

Gemäß den Figuren 2 und 5 erstreckt sich der Kragen K in beidseitig gleichem axialem Überstand zur Kolben-Ringfläche.

Wie Fig. 5 weiter entnehmbar, ist dort das Steigrohr 6 nicht in die Einsteckhülse 12, sondern auf diese gesteckt.

Jenseits der Decke 10 des Aufsatzes 9 liegt ein konzentrisch zur Einsteckhülse 12 verlaufender zylindrischer Steckvorsprung 14 des Aufsatzes 9 für einen Balg B. Letzterer besteht aus Gummi oder entsprechend elastischem bzw. flexiblem Kunststoff und nimmt nach Freigabe stets die aus den Figuren 1, 4 und 7 ersichtliche Grundstellung wieder ein; die Rückstellkraft ist entsprechend bemessen. Dieser Balg bildet insoweit das Kopfstück des Spenders.

Das Balginnere formt in Verein mit der Decke 10 einen Pumpenraum 15. Gebildet ist der Steckvorsprung von der Topfwandung des Aufsatzes 9. Das Kopfstück ist hierauf dichtend aufgeprellt. An den den Pumpenraum bildenden, also den größten Raumanteil umfassenden Abschnitt des Balges B bzw. Kopfstückes schließt eine Ausgabetülle 16 an. Bezüglich der letzteren handelt es sich um eine röhrchenförmige, im Endbereich leicht flachgedrückte, nach obengerichtete Anformung des Kopfstückes. Der dezentralliegenden, randnahen Ausgabetülle 16 benachbart liegt eine Betätigungsfläche 17. Diese ist zur Erhöhung der Griffigkeit gerauht oder gerieft und setzt sich in einen zum inneren Ende des Röhrchens hin abfallenden Wandungsabschnitt 18 fort. Die Dicke desselben nimmt in dieser Richtung entweder kontinuierlich ab (vergleiche Fig. 5) oder abrupt (vergleiche Fig. 7), so daß zwischen dieser und der dortigen Flanke der Ausgabetülle 16 eine Art Knickstelle a entsteht. Über diese setzt sich gemäß Fig. 1 und 4 das Röhrchen der Ausgabetulle 16 nach untenhin noch etwas fort. Eine zweite Knickstelle, bezeichnet mit b, befindet sich unterhalb der die maximale Wandungsdicke aufweisenden Zone der Betätigungsfläche 17 des Wandungsabschnitts 18. Von dort setzt sich der Wandungsabschnitt 18 in eine in Gegenrichtung stärker abfallend geneigte Fußwand 19 fort, welche im Steckvorsprung 14 des Kopfstükkes wurzelt. Wandungsabschnitt 18 und Fußwand 19 wirken wie ein Kniehebel. Dessen eingeschlossener Winkel trägt in Grundstellung (Figuren 1,4) ca. 90 Grad. Unter Betätigung vergrößert sich dieser Winkel kontinuierlich bis zur Strecklage.

An der der Ausgabetülle 16 der Betätigungstaste 17 gegenüberliegenden, also äußeren Flanke bildet die Ausgabetülle 16 etwas unterhalb der Höhe der Knickstelle a eine Knickstelle c aus. Eine letzte Knickstelle d ist am unteren Ende der Fußwand 19 berücksichtigt, und zwar auf Höhe des oberen Endes des Steckvorsprunges 14. Alle Knickstellen zusammen bringen ein Gelenkvieleck, welches unter Belastung der Betätigungsfläche 17 die beispielsweise aus Figur 2 ersichtliche Faltstellung bringt, die zu einem leichten radialen Auswärtsschwenken der Ausgabetülle 16 führt. Im Falle der beiden ersten Ausführungsbeispiele ist die besagte Knickstelle c durch einen tüllenseitigen Wandungsspalt, dessen offenes Ende in Richtung der Decke 10 weist definiert.

Der Pumpenraum 15 besitzt weiter gehäuseseitig ein Eingangsventil V1 und tüllenseitig ein Auslaßventil V2.

Das Eingangsventil V1 gemäß dem ersten Ausführungsbeispiel ist als Klappventil realisiert, dies unter Freischneiden eines Lappens 20 aus der Decke 10 des Steckvorsprungs 14 des aus entsprechend flexiblem Material gestalteten Aufsatzes 9. Die verbleibende Verbindungszone zum genannten Steckvorsprung 14 ist in ihrer Dicke deutlich reduziert, so daß ein seitliches Filmcharnier 21 vorliegt. Der Lappen 20 liegt auf der dem Filmcharnier 21 gegenüberliegende Seite auf dem geschnittenen, einen Ventilsitz bildenen Lochrand auf, außerdem liegt das Filmscharnier im Bereich der Oberseite des Steckvorsprunges 14, so daß ein Durchtritt in Gegenrichtung, d.h. in Richtung des Steigrohres 6 zufolge Kantenanlage unterbunden ist.

Beim dritten Ausführungsbeispiel handelt es sich im Prinzip um ein gleichgestaltetes Eingangsventil V1. Der Unterschied besteht lediglich in einer kalottenförmigen Wölbung der dortigen Ventilklappe 20. Auch ist diese im Grunde - schalenförmige Klappe im Basisbereich in der Ebene der Decke 10 gehalten. Die Schalenhöhlung weist in Richtung des Steigrohr-Innenraumes. Die Abstützung erfolgt hier auf dem deckenseitigen Stirnrand des Steigrohres 6. Dabei liegt aber nicht die gesamte Randkante der kappenförmigen Ventilklappe 20 auf, sondern nur der äußere Teilbereich der Stirnwand. Der innere Bereich ist vielmehr in Art einer Ringrippe ausgebildet, mit außenseitiger Konusfläche, die an der Innenkante des zylindrischen Rohres anliegt. Oberseitig befindet sich im Bereich der Ventilklappeneinformung ein konischer Ringraum, so daß die Ventilklappe genügenden Klapp-Freiraum hat.

Das den beiden ersten Ausführungsbeispielen zugrundeliegende Auslaßventil V2 weicht von der klassischen Gestaltungsart ab. Dort wird das Ausgangsventil praktisch von der pastösen Masse selbst gebildet, die sich wie ein reibungsschlüssiger "Stopfen" verhält, welcher sich bei Unterdruck in der Pumpenkammer 15 zufolge entsprechender Querschnittsbemessung des Röhrchens langsamer verlagert als die den Pumpenraumvorrat speisende Masse.

Im Hinblick auf das zweite Ausführungsbeispiel liegt hinsichtlich der Ausgabetülle 16 die gleiche Ausgestaltung vor; lediglich das Eingangsventil V1 ist dort etwas anderen Aufbaues. Es handelt sich hier um einen die zentral durchbrochene Decke 10 des Aufsatzes 9 randübergreifenden Teller. Die federnde Anlage an seiner korrespondierenden Ventilsitzfläche ist durch eine Zug-Wendelfeder 23 bewirkt. Deren obere endständige Federwindung kann dem Teller 22 gleich angeformt sein. Die Wendel durchsetzt die Einsteckhülse 12 auf ganzer Länge, um sich schließlich mit der unteren endstandigen,einen größeren Wendeldurchmesser aufweisenden Windung auf dem dortigen Stirnrand 12' der Einsteckhülse 12 abzustützen.

Das Auslaßventil V2 gemäß Figur 7 ist dagegen wiederum als Ventilklappe 20 gestaltet. Diese liegt im Ansatzbereich der Ausgabetülle 16. Es entspringt einem ein Scharnier 16" bildenden, - schneidenartigen Vorsprung. Die korrespondierende Ventilsitzfläche der Ventilklappe 20 ist von der Innenwandung der Ausgabetülle gebildet und einfach durch leichte Schrägstellung der Ventilklappe in Ausgaberichtung abgestützt.

Das Kopfstück ist von einer Schutzkappe 24 überfangen. Deren Kappenboden formt rotationssymmetrisch einen Abschnittsverlauf, der dahingehend genutzt wird, daß der Mündungsrand 16' der Ausgabetülle 16 dichtend gegen die korrespondierende Innenfläche 24' dieser Abdeckkappe 24 anliegt.

Der deckenseitige Endbereich der Schutzkappe 24 trägt an seiner Innenseite die Gewinde 28, welches mit einem entsprechenden Gegengewinde 29 des Balges B bzw. Kopfstückes zusammenwirkt. Es handelt sich um eine mehrgängiges Steilgewinde. Das Stirnende 24" der Schutzkappe 24 tritt - schraubbegrenzend gegen einen im unteren Randbereich des Aufsatzes 9 angeformten, auswärtsgerichteten Ringbund 30. Unterhalb des Ringbundes 30 erstreckt sich die ebenfalls ringförmige Zwischenstufe St des Aufsatzes 9.

Der Ringbund 30 ist als bewegliche Dichtungslippe gestaltet. Es wird auf Figur 10 verwiesen. Wie ersichtlich, hebt der Ringbund 30 bei nicht fest aufgeschraubter Schutzkappe 24 von der korrespondierenden Ringfläche der Zwischenstufe St ab. Erst mit festerem Zuschrauben der Schutzkappe 24 wird der Ringbund 30 gegen die besagte Fläche gedrückt. Es ist so ein hermetischer Abschluß der pastösen Masse erreicht.

Eine von oben her angeformte Ringnut 30' erhöht die Beweglichkeit des Ringbundes 30; sie fluchtet mit der Schutzkappen-Mantelwand.

In Gebrauchsstellung, in welcher die Schutzkappe 24 abgenommen ist, bleibt hingegen ein Spaltweg zum Raum hinter den Kolben 5 frei, dies aus Gründen des Luftausgleichs. Bei den erstgenannten Ausführungsbeispielen befinden sich Löcher 26 in der Randzone der Decke 10. Beim Ausführungsbeispiel gemäß Figur 7 hingegen sind die Löcher in Form von Querbohrungen im Steckvorsprung 14 realisiert. Die Schließstellung ist in Figur 10 durch strichpunktierte Linienart gekennzeichnet. Der belastende Spalt trägt das Bezugszeichen 31. Er besteht aus einem vertikalen Kanalabschnitt 32 und einem über eine Schräge anschließenden, horizontalen Kanalabschnitt 33. Letzterer steht mit dem Loch 26 in Verbindung.

Zur Bestückung des die pastöse Masse M enthaltenden Spendergehäuses 1 mit der Pumpeinrichtung 2 wird diese von oben her über den Hals 3 zugeführt. Der dabei über den Oberrand 3' des Halses 3 einlaufende, in definiertem Abstand zur Decke 10 gehaltene Kolben 5 verdrängt den vor ihm befindlichen Anteil der pastösen Masse. Diese steigt über das Steigrohr 6 in den Kopf des Spenders, also in den Pumpenraum 15. Die Flexibilität des Kolben streift dabei die Gehäuseinnenwandung 1' sauber und verlustfrei ab. Die Außenrandkante des in Richtung der Decke 10 abgebogenen Randabschnittes des Kolbens 5 liegt in Ausgangs-Grundstellung dann unmittelbar unter der Übergangsstufe Ü zwischen dem querschnittskleineren Hals 3 und dem einen größeren lichten Durchmesser aufweisenden Bereich des Spendergehäuses. In der besagten Ausgangs-Grundstellung (vergleiche Fig. 7) liegt der Kolben 5 in einem solchen axialen Abstand unterhalb der Decke 10, daß das zwischen Kolben 5 und und dem Oberrand 3' verbleibende Volumen etwa dem Innenvolumen des Pumpenraumes 15 entspricht. Das hat zur Folge, daß Eingangsventil V1 und Auslaßventil V2 benetzt werden. Der Spender ist damit einsatzbereit. Diese Funktion ist wie folgt:

Ein in Richtung des Pfeiles P erfolgendes Niederdrücken verringert das Volumen in der Pumpenkammer 15. Diese Volumenverringerung führt zu einer Ausbringung der sich im Kopf des Spenders befindenden portionierten Menge über die Ausgabetülle 16. Der im Kopf vorherrschende Verdrängungsdruck schließt dabei das Eingangsventil V1. Entlastet man nun die Druckbetätigungsfläche 17, so stellt sich der die erforderliche Rückstellkraft aufweisende Balg B bzw. das Kopfstück in seine ursprüngliche Grundstellung zurück. Hierbei öffnet sich das Eingangsventil V1 ein. Über das Steigrohr 6 wird pastöse Masse nachgesogen. Die entsprechende Wirkung setzt sich auf die das Steigrohr 6 ringartig umgebende Masse M fort mit der Konsequenz, daß über diese der Kolben 5 in Richtung des Bodens 8 nachgesaugt wird, und dies bei jedem Ausgabeschritt. Die Ausgabe erfolgt also nicht gegen die Belastung des restlichen Materiales. Die entsprechende Rückstellung geschieht in einem vom Betätigungshub unabhängigen Rückhub. Der Raum hinter dem Kolben 5 erfährt einen Druckausgleich zufolge die Decke bzw. die Wandung des Aufsatzes 9 durchsetzender Löcher 26. Das Nachfüllen der Pumpenkammer 15 ist jeweils abgeschlossen, bevor die in der Ausgabetülle 16 befindliche Masse sich in die Pumpenkammer einlutschen kann. Beim dritten Ausführungsbeispiel verhindert dies das eine Ventilklappe 20 aufweisende Auslaßventil V2. Die relativ geringfügige Rückverlagerung des stopfenförmigen Anteils ist dagegen auch insofern günstig, als ein von der Ausgabe herrührender etwaiger Überstand über die Mundöffnung 16' der Ausgabetülle 16 zurückgezogen wird. Die eine entsprechende Schließflanke 24' aufweisende Decke der Schutzkappe 24 verhindert ein Antrocknen. Selbst wenn aufgrund eines längeren Nichtbenutzens eine gewisse Andickung stattgefunden haben sollte, so ist die Verdrängungswirkung des Balges B so ausreichend, daß ein etwaiger "Pfropfen" durchaus sicher ausgebracht wird. Zufolge der Klipszuordnung des Balges B läßt sich dieser jederzeit vom Aufsatz abziehen und reinigen.

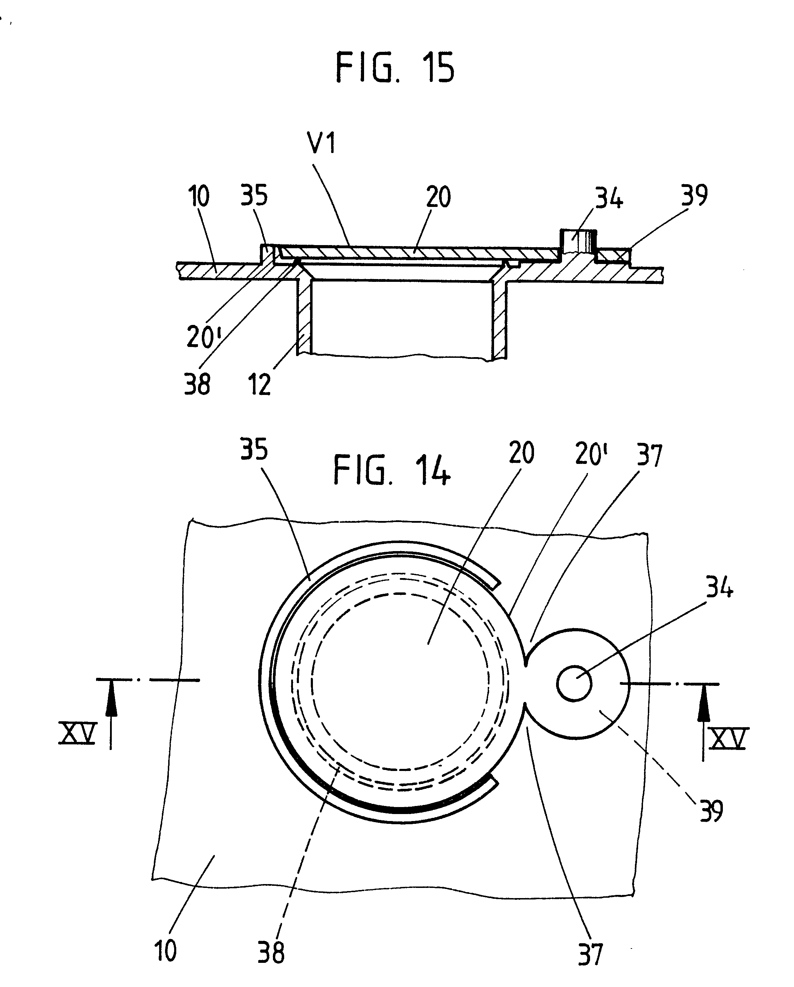

Eine abgewandelte Ausführungsform des Eingangsventiles V1 ist noch in den Figuren 14 und 15 veranschaulicht. Dort besteht das Eingangsventil V1 aus einem Stanzling aus elastischem Material. Die Dicke des Ausgangsmateriales beträgt etwa 1 mm. Es kann sich um Gummi oder einen vergleichbar elastischen bzw. flexiblen Werkstoff handeln. Die Umrissform des elastischen Lappens ist der eines Schallkörpers vergleichbar, beispielsweise einer Gitarre. Der elastische, das Eingangsventil V1 bildende Lappen steckt mit seiner umrisskleineren Anformung auf einem Tragzapfen 34. Letzterer ist der Decke 10 des Aufsatzes 9 gleich angeformt. Es handelt sich um einen zylindrischen Stehzapfen. Die Aufsteckdurchbrechung des Lappens 20 ist etwas kleiner gewählt, so daß sich ein verspannender Umgriff ergibt, der eine gewisse Drehsicherung bewirkt.

Eine weitere Maßnahme des Verhinderns eines Verschwenkens des Lappens auf dem Tragzapfen bildet ein den Rand 20' des kreisrunden Lappens 20 mit etwas Spiel umgebender Ringwall 35. Der Rand 20' ist leicht konisch zugeschnitten, die Verjüngung liegt in Richtung des Steigrohres 6.

Der Ringwall 35 ist in Richtung des Tragzapfens 34 offengelassen. Die Öffnung ist kleiner als der kreis runde Durchmesser des Lappens 20. Die Enden des Ringwalles 35 weisen berührungsfrei in Richtung je eines Zwickelbereichs 37 zwischen Befestigungsanformung und eigentlichem Ventilkörper. Die Zwickel 37 entstehen durch etwa tangentialen Ansatz zweier geometrisch kreisförmiger Abschnitte des Stanzlings.

Die Höhe des Ringwalles 35 ist so gewählt, daß er oben mit der Oberseite des Lappens 20 abschließt.

Die Ventilsitzfläche ist von einer schneidenförmigen, ebenfalls nach oben gerichteten Ringrippe 36 gebildet. Letztere geht von der Oberseite der Decke 10 aus und ist ihr gleich angeformt. Der Querschnitt dieser Ringrippe 38 ist dreieckig, wobei eine Dreieckseite in der Oberseite der Decke 10 wurzelt. Die Schneidenzuspitzung liegt etwa bei 30 bis 60 Grad. Um den Ringrippenüberstand in Bezug auf die Befestigungsstelle höhenmäßig zu kompensieren ist schließlich so vorgegangen, daß der Kamm der Ringrippe 38 höhengleich fluchtet mit einer den Lappen 20 im Befestigungsbereich abstützenden Ringschulter 39 des Tragzapfens 34.

Die Ringrippe 38 erstreckt sich etwa in der Vertikalebene der deckenunterseitig angeformten Einsteckhülse 12.

Alle in der Beschreibung erwähnten und in der Zeichnung dargestellten neuen Merkmale sind erfindungswesentlich, auch soweit sie in den Ansprüchen nicht ausdrücklich beansprucht sind.

## Ansprüche

1. Spender zur portionierten Ausgabe pastöser Massen, z.B. Senf oder dergleichen, mit einem Spendergehäuse, auf dessen Oberrand eine Decke aufsitzt, welche Träger einer Pumpeinrichtung ist, und in welchem Spendergehäuse ein schrittweise abwärts in Richtung des Gehäusebodens wandernder Kolben vorgesehen ist, der von einem bis zum Gehäuseboden reichenden, ortsfesten Steigrohr durchsetzt ist, dessen oberes Ende mit einer Ausgabetülle in Verbindung steht, welcher Ausgabetülle eine Betätigungsfläche der Pumpeneinrichtung benachbart ist, bei deren Rücklauf der Kolben abwärts gesaugt ist, dadurch gekennzeichnet, daß das unten offene Steigrohr (6) unterhalb des Eingangsventiles (V1) eines durch Verlagerung der Betätigungsfläche (17) sich elastisch verkleinernden Pumpenraumes (15) sitzt und der Kolben (5) in Ausgangs-Grundstellung (Fig.1,4,7) in einem Abstand unterhalb der Decke (10) sitzt derart, daß das zwischen Kolben (5) und Oberrand (3') des Spendergehäuses (1) verbleibende Volumen etwa dem Innenvolumen des Pumpenraumes (15) entspricht.

2. Spender nach Anspruch 1, dadurch gekennzeichnet, daß der Kolben (5) in seiner Ausgangsgrundstellung gegen einen von der Decke (10) ausgehenden Anschlag stößt.

3. Spender nach einem oder mehreren der vorhergehenden Ansprüche, dadurch gekennzeichnet, daß der Anschlag von einer Verbreiterung (V) auf der Mantelfläche des Steigrohres (6) gebildet ist.

4. Spender nach einem oder mehreren der vorhergehenden Ansprüche, dadurch gekennzeichnet, daß die Verbreiterung (V) als von der Decke (10) ausgehende Einsteckhülse (12) für das Steigrohr (6) gestaltet ist.

5. Spender nach einem oder mehreren der vorhergehenden Ansprüche dadurch gekennzeichnet, daß das Steigrohr (6) unterhalb der das Eingangsventil (V1) tragenden Decke (10) eines topfförmigen Aufsatzes 9 angeordnet ist, oberhalb dessen sich der Pumpenraum (15) erstreckt.

6. Spender nach einem oder mehreren der vorhergehenden Ansprüche, dadurch gekennzeichnet, daß der tellerförmige Kolben (5) aus durchbiegungselastischem Material gebildet ist und einen in Richtung der Decke (10) abgebogenen Randabschnitt besitzt.

7. Spender nach einem oder mehreren der vorhergehenden Ansprüche, dadurch gekennzeichnet, daß das obere Ende des Steigrohres (6) mit einer in das Steigrohr (6) gesteckten Einsteckhülse (12) verbunden ist und in der Einsteckhülse (12) sich eine gegen deren freien Stirnrand (12')

abstützende Zug-Wendelfeder (23) befindet, die von der Unterseite eines Tellers (22) des Eingangventiles (V1) ausgeht.

8. Spender nach einem oder mehreren der vorhergehenden Ansprüche, dadurch gekennzeichnet, daß die Ausgabetülle (16) an ihrer der Betätigunsfläche (17) gegenüberliegenden Flanke eine Knickstelle (c) besitzt und die Betätigungsfläche (17) mit ihrer Fußwand (19) einen Kniehebel bildet.

9. Spender nach einem oder mehreren der vorhergehenden Ansprüche, dadurch gekennzeichnet, daß der Kolben (5) einen über seine umfangsseite Dichtkante (Randlippe 5') in Richtung der Decke (10) vorstehenden Kragen K besitzt, welcher in Überlappung tritt zur von der Decke (10) ausgehenden Einsteckhülse (12), welcher zugleich den Anschlag bildet.

10. Spender nach einem oder mehreren der vorhergehenden Ansprüche, dadurch gekennzeichnet, daß dem Kragen (K) Klemmwülste (5'''') angeformt sind.

11. Spender nach einem oder mehreren der vorhergehenden Ansprüche, gekennzeichnet durch ein Pumpenraum-Auslassventil (V2) im Bereich des Ansatzes der Ausgabetülle (16).

12. Spender nach einem oder mehreren der vorhergehenden Ansprüche, dadurch gekennzeichnet, dass der Mündungsrand (16') der Ausgabetülle (16) dichtend gegen die Innenfläche (24') einer Schutzkappe (24) anliegt.

13. Spender nach einem oder mehreren der vorhergehenden Ansprüche, gekennzeichnet, daß die Decke (10) als Boden eines topfförmigen Aufsatzes (9) gestaltet ist, welcher sich über eine Zwischenstufe (St) in einen querschnittsgrößeren Aufsatzring (9'') fortsetzt.

14. Spender nach einem oder mehreren der vorhergehenden Ansprüche, dadurch gekennzeichnet, daß die Zwischenstufe (St) mit einer Dichtungslippe (9''') ausgestattes ist, die sich auf den Oberrand (3') des Spendergehäuses (1) aufsetzt.

15. Spender nach einem oder mehreren der vorhergehenden Ansprüche, gekennzeichnet durch eine kalottenförmige Ventilklappe (20) des Auslassventils (V2) der konzentrisch zum Steigrohr (6) liegenden Decke (10).

16. Spender nach einem oder mehreren der vorhergehenden Ansprüche, dadurch gekennzeichnet, daß der Randabschnitt des Kolbens (5) über eine V-förmige Ringkehle (5''') in die zentrale, dickere Kolben-Ringfläche übergeht.

17. Spender nach einem oder mehreren der vorhergehenden Ansprüche, gekennzeichnet durch ein insgesamt den Pumpenraum (15) bildendes elastisches Kopfstück (Balg B) welches auf die Topfwandung des Aufsatzes (9) dichtend aufgeprellt ist und sich in einen auswärtsgerichteten Ringbund (30) fortsetzt, auf dessen Oberseite der Mündungsrand (24''') der Schutzkappe (24) tritt.

18. Spender nach einem oder mehreren der vorhergehenden Ansprüche, dadurch gekennzeichnet, daß der Ringbund (30) als bewegliche Dichtlippe gestaltet ist, wobei die Schutzkappe (24) ein Innengewinde (28) hat, welches in ein Gegengewinde (29) des Aufsatzes (9) eingreift.

19. Spender nach einem oder mehreren der vorhergehenden Ansprüche, dadurch gekennzeichnet, daß die Dichtlippe bei aufgesetzter Schutzkappe (24) Lufteinlassöffnungen (Löcher 26) zum Inneren des Spendergehäuses (1) hin verschließt.

20. Spender nach einem oder mehreren der vorhergehenden Ansprüche, dadurch gekennzeichnet, daß das aus Glas bestehende Spendergehäuse (1) eine zylindrische Innenwandfläche (1'), eine in Längsrichtung ballig verlaufende Aussenfläche (1'') und einen querschnittskleineren Hals (3) besitzt, welch letzterer den querschnittsgrößeren Aufsatzring (9'') trägt.

21. Spender nach einem oder mehreren der vorhergehenden Ansprüche, dadurch gekennzeichnet, daß die Außen randkante des in Richtung der Decke (10) abgebogenen Randabschnittes des Kolbens (5) in Ausgang-Grundstellung (Fig. 7) unmittelbar unter der Übergangsstufe (Ü) zum querschnittskleineren Hals (3) liegt.

22. Spender nach einem oder mehreren der vorhergehenden Ansprüche, dadurch gekennzeichnet, daß sich die Dicke des tellerförmigen Kolben (5) nach aussen hin verringert.

23. Spender nach einem oder mehreren der vorhergehenden Ansprüche, dadurch gekennzeichnet, daß das Eingangsventil (V1) von einem auf einen seitlich der Ventilsitzfläche angeordneten Tragzapfen (34) aufgesteckten, elastischen Lappen (20) gebildet ist, dessen Rand (20') von einem nur in Richtung des Tragzapfens (34) offengelassenen Ringwall (35) umgeben ist, und daß die Ventilsitzfläche von einer schneidenförmigen Ringrippe (38) auf der Oberseite der Decke (10) gebildet ist.

24. Spender nach einem oder mehreren der vorhergehenden Ansprüche, dadurch gekennzeichnet, daß der Kamm der Ringrippe (38) höhengleich fluchtet mit einer den Lappen (20) abstützenden Ringschulter (39) des Tragzapfens (34).

FIG. 1

0 262 535

FIG. 2

FIG. 3

# FIG. 4

FIG. 5

FIG. 6

FIG. 7

FIG. 8

FIG. 9

0 262 535

FIG. 10

FIG. 11

FIG. 12

FIG. 13

# FIG. 15

V1

10    35    20    34    39

20'

38    12

# FIG. 14

35    20    20'    37

34

39

10    38    37